# EUROPEAN PATENT APPLICATION

(11) **EP 3 808 431 A1**
(43) Date of publication of application: **21.04.2021**
(21) Application number: 20192531.0
(22) Date of filing: 25.08.2020
(51) Int. Cl.: B01D 53/04, B01D 53/14, B01D 5/00

(54) **PROCESS AND PLANT FOR DEACIDIFYING A FLUID STREAM COMPRISING SULFUR COMPOUNDS, INCLUDING ORGANIC SULFUR COMPOUNDS**

(30) Priority: 12.09.2019 EP 19197069
(71) Applicant: BASF SE, 67056 Ludwigshafen am Rhein (DE); L'Air Liquide, 75007 Paris (FR)
(72) Inventor: INGRAM, Thomas, 67056 Ludwigshafen (DE); NEUMANN, Klaus, 31582 Nienburg/Weser (DE); HAENEL, Alexander, 60439 Frankfurt am Main (DE); LINICUS, Matthias, 60439 Frankfurt am Main (DE)
(74) Representative: Reitstötter Kinzebach

(57) **Abstract**

A process for deacidifying a fluid stream comprising sulfur compounds including organic sulfur compounds, comprising a) providing at least one adsorber containing an adsorbent effective to selectively adsorb organic sulfur compounds; b) passing the fluid stream through the adsorber to obtain an organic sulfur compounds-depleted fluid stream and a spent adsorbent; c) regenerating the spent adsorbent by passing a purge gas through the spent adsorbent to obtain a regenerated adsorbent and an organic sulfur compounds-containing purge gas; d) processing the organic sulfur compounds-containing purge gas to obtain a stabilized liquid containing organic sulfur compounds and a first offgas; e) treating the organic sulfur compounds-depleted fluid stream in a first absorber with a first substream of a regenerated absorbent liquid to obtain a deacidified organic sulfur compounds-depleted fluid stream and a first acid gas-laden absorbent liquid; f) decompressing the first acid gas-laden absorbent liquid to obtain a second offgas and a partially regenerated absorbent liquid; g) treating at least part of the first offgas and/or at least part of the second offgas in a second absorber with a second substream of regenerated absorbent liquid to obtain a deacidified third offgas and a second acid gas-laden absorbent liquid; h) regenerating the partially regenerated absorbent liquid in a desorption column to obtain an organic sulfur compounds-depleted acid offgas and a regenerated absorbent liquid; i) directing the regenerated absorbent liquid to steps e) and g); and j) directing the second acid gas-laden absorbent liquid to steps f) and/or h). The invention also relates to a plant for deacidifying a fluid stream comprising sulfur compounds including organic sulfur compounds. The process of the invention allows for a high degree of removal of organic sulfur compounds from the fluid stream prior to the process steps relating to acid gas removal.

## Description

The present invention relates to a process and a plant for deacidifying a fluid stream comprising sulfur compounds including organic sulfur compounds.

The removal of acid gases, for example CO₂, H₂S, SO₂, CS₂, HCN, COS or mercaptans, from fluid streams such as natural gas, refinery gas or synthesis gas is important for various reasons. Carbon dioxide has to be removed from natural gas because a high concentration of CO₂ reduces the calorific value of the gas. Moreover, CO₂ in conjunction with moisture can lead to corrosion in pipes and valves.

Sulfur compounds in natural gas tend to form corrosive acids in particular together with the water frequently entrained by the natural gas. For the transport of the natural gas in a pipeline or further processing in a natural gas liquefaction plant (LNG = liquefied natural gas), given limits for the sulfur-containing impurities therefore have to be observed. In addition, numerous sulfur compounds, including various organic sulfur compounds, are malodorous and toxic even at low concentrations.

Still further, high levels of heavier hydrocarbons and mercaptans in the acid gases often create conversion problems in a downstream sulfur plant. For example, for complete destruction of mercaptans and other organic sulfur contaminants, the Claus reaction furnace must be operated at a high flame temperature, which will significantly reduce the life of the sulfur plant. Moreover, even with higher flame temperatures, destruction of the heavier mercaptans is often difficult and incomplete, which results in fouling of the reaction catalysts and ultimately plant shutdown. In other sulfur conversion technologies for treating an acid offgas, such as liquid-redox or biotechnological processes, organic sulfur contained in the acid offgas can contaminate the elemental sulfur obtained in the conversion process, thus resulting in odor issues. To circumvent at least some of the problems associated with inadequate contaminant removal, various pre- and post-treatment methods have been suggested. Unfortunately, most of such methods tend to be relatively ineffective, inefficient and costly. Where contaminants are removed by a fixed bed absorbent process, they may further pose a disposal problem for the spent absorbent.

Known processes for removing acid gases include scrubbing operations with aqueous absorbent liquid solutions of inorganic or organic bases, such as amines. When acid gases are dissolved in the absorbent liquid, ions form with the bases. The absorbent liquid can be regenerated by decompression to a lower pressure and/or by stripping, whereby the ionic species react in reverse and the acid gases are released and/or stripped out by means of steam. After the regeneration process, the absorbent liquid can be reused.

US 7,442,233 B2 describes the removal of heavy hydrocarbons, carbon dioxide, hydrogen sulfide and water from a raw natural gas feed by a three step process involving the adsorption of heavy hydrocarbons and water on an adsorbent bed selective for these compounds, a subsequent aqueous lean amine treatment for the absorptive removal of acid gases, and an adsorptive removal of water.

It is an object of the invention to specify a process for deacidifying a fluid stream comprising sulfur compounds so as to obtain a purified product stream and a fluid stream suitable for processing in a sulfur recovery unit.

The object is achieved by a process for deacidifying a fluid stream comprising sulfur compounds, including organic sulfur compounds, comprising
a) providing at least one adsorber containing an adsorbent effective to selectively adsorb organic sulfur compounds;
b) passing the fluid stream through the adsorber to obtain an organic sulfur compounds-depleted fluid stream and a spent adsorbent;
c) regenerating the spent adsorbent by passing a purge gas through the spent adsorbent to obtain a regenerated adsorbent and an organic sulfur compounds-containing purge gas;
d) processing the organic sulfur compounds-containing purge gas to obtain a stabilized liquid containing organic sulfur compounds and a first offgas;
e) treating the organic sulfur compounds-depleted fluid stream in a first absorber with a first substream of a regenerated absorbent liquid to obtain a deacidified organic sulfur compounds-depleted fluid stream and a first acid gas-laden absorbent liquid;
f) decompressing the first acid gas-laden absorbent liquid to obtain a second offgas and a partially regenerated absorbent liquid;
g) treating at least part of the first offgas and/or at least part of the second offgas in a second absorber with a second substream of regenerated absorbent liquid to obtain a deacidified third offgas and a second acid gas-laden absorbent liquid;
h) regenerating the partially regenerated absorbent liquid in a desorption column to obtain an organic sulfur compounds-depleted acid offgas and a regenerated absorbent liquid;
i) directing the regenerated absorbent liquid to steps e) and g); and
j) directing the second acid gas-laden absorbent liquid to steps f) and/or h).

In a further aspect, the invention provides a plant suitable for carrying out the process of the invention. The plant comprises
i) an adsorption unit (101) comprising a plurality of adsorbers, each adsorber containing an adsorbent effective to selectively adsorb organic sulfur compounds; the adsorber(s) being operable in (α) adsorption mode wherein the adsorber is configured to receive said fluid stream comprising sulfur compounds including organic sulfur compounds to produce an organic sulfur compounds-depleted fluid stream; or (β) regeneration mode wherein the adsorber is configured to receive a purge gas to be passed through the spent adsorbent to obtain a regenerated adsorbent and an organic sulfur compounds-containing purge gas;
ii) a first absorber (104) for treating the organic sulfur compounds-depleted fluid stream with a first substream of a regenerated absorbent liquid to obtain a deacidified organic sulfur compounds-depleted fluid stream and a first acid gas-laden absorbent liquid;
iii) a decompression vessel (106) for decompressing the first acid gas-laden absorbent liquid to obtain a second offgas and a partially regenerated absorbent liquid;
iv) a second absorber (108) for treating at least part of the first offgas and/or at least part of the second offgas with a second substream of regenerated absorbent liquid to obtain a deacidified third offgas and a second acid gas-laden absorbent liquid;
v) a desorption column (112) for regenerating the partially regenerated absorbent liquid to obtain an organic sulfur compounds-depleted acid offgas and a regenerated absorbent liquid;
vi) a processing unit (102) for processing the organic sulfur compounds-containing purge gas to obtain a stabilized liquid containing organic sulfur compounds and a first offgas;
vii) means for directing the organic sulfur compounds-depleted fluid stream from the adsorber(s) when in adsorption mode to the first absorber (104); means for directing the first acid gas-laden absorbent liquid from the first absorber (104) to the decompression vessel (106); means for directing the partially regenerated absorbent liquid from the decompression vessel (106) to the desorption column (112); means for directing the second offgas from the decompression vessel (106) to the second absorber (108);
viii) means for directing the organic sulfur compounds-containing purge gas from the adsorber(s) when in regeneration mode to the processing unit (102); and means for directing the first offgas from the processing unit (102) to the second absorber (108).

Unless stated otherwise, the following explanations and description of embodiments and preferred embodiments of the invention apply to both the process and the plant of the invention.

The process of the invention allows for a high degree of removal of organic sulfur compounds from the fluid stream prior to the process steps relating to acid gas removal.

Hence, both a deacidified organic sulfur compounds-depleted fluid stream, which can be considered the product stream of the process, and an organic sulfur compounds-depleted acid offgas are provided by the process of the invention. Due to being depleted in organic sulfur compounds, the acid offgas is suitable for downstream processing in a sulfur recovery unit while avoiding conversion problems assiciated with the presence of mercaptans in the acid offgas.

The process of the invention is suitable for treatment of all kinds of fluids. Fluids are firstly gases such as natural gas, synthesis gas, coke oven gas, cracking gas, coal gasification gas, cycle gas, landfill gases and combustion gases, and secondly liquids that are essentially immiscible with the absorbent liquid, such as LPG (liquefied petroleum gas) or NGL (natural gas liquids).

In a preferred embodiment, the fluid stream is a hydrocarbonaceous fluid stream. The hydrocarbons present are, for example, aliphatic hydrocarbons such as C₁-C₄ hydrocarbons such as methane, unsaturated hydrocarbons such as ethylene or propylene, or aromatic hydrocarbons such as benzene, toluene or xylene.

The fluid stream comprising sulfur compounds further usually comprises acid gases, such as carbon dioxide and/or hydrogen sulfide. In a preferred embodiment, the fluid stream comprises carbon dioxide and hydrogen sulfide.

Particularly, capital investment and operating costs of the process described herein are economically justified if the hydrogen sulfide mass flow in the fluid stream is less than 40 tonnes per day, preferably less than 20 tonnes and most preferably less than 5 tonnes per day. Similarly, when the hydrogen sulfide mass flow in the fluid stream is at least 5 tonnes per day, the fluid stream preferably comprises carbon dioxide and hydrogen sulfide in a molar ratio of more than 5:1, especially more than 7:1 and preferably more than 9:1.

The inventive process involves providing one or more adsorbers containing an adsorbent effective to selectively adsorb organic sulfur compounds. The fluid stream comprising sulfur compounds is passed through the adsorber to obtain an organic sulfur compounds-depleted fluid stream and a spent adsorbent.

Organic sulfur compounds are understood to mean compounds comprising at least one sulfur atom and at least one carbon-hydrogen bond, such as mercaptans.

Herein, "an adsorbent effective to selectively adsorb organic sulfur compounds" is understood to mean that the adsorbent selectively adsorbs organic sulfur compounds, especially mercaptans, such as methanethiol, ethanethiol, butanethiol, hexanethiol and octanethiol, over other components of the fluid stream, such as C₁-C₃-hydrocarbons, carbon dioxide and hydrogen sulfide.

In the present context, "selectivity for organic sulfur compounds over other components of the fluid stream" is understood to mean that the reduction in the molar amount of organic sulfur compounds present in the organic sulfur compounds-depleted fluid stream relative to the molar amount of organic sulfur compounds present in the fluid stream comprising sulfur compounds, i.e., the feed stream, is greater than the reduction in the molar amount of other components of the feed stream, especially each of C₁-C₃-hydrocarbons, carbon dioxide and hydrogen sulfide.

In one embodiment, the adsorbent is effective to selectively adsorb organic sulfur compounds over C₁-C₃-hydrocarbons, carbon dioxide and hydrogen sulfide, and, in addition, is effective to co-adsorb heavier hydrocarbons, such as C₄₊-hydrocarbons, more preferably C₅₊-hydrocarbons and especially C₆₊-hydrocarbons, and water from the fluid stream. In one embodiment, the adsorbent is effective to selectively adsorb organic sulfur compounds, C₄₊-hydrocarbons, more preferably C₅₊-hydrocarbons and especially C₆₊-hydrocarbons, and water over C₁-C₃-hydrocarbons, carbon dioxide and hydrogen sulfide.

Heavier hydrocarbons, i.e., C₄₊-hydrocarbons, may comprise benzene, toluene and xylenes (BTX), which may be present in, e.g., natural gas and can lead to operational challenges if not removed early in the process of a gas treatment plant. For example, BTX can cause a significantly reduced lifetime of the Claus catalysts in sulfur recovery plants. In LNG production, BTX needs to be removed to prevent freezing in the cryogenic part of the process.

The co-adsorption of heavier hydrocarbons is also favourable so as to reduce the potential of disadvantageous foaming in the downstream acid gas absorption steps. The potential of foaming is especially great when the acid gas absorption steps comprise an amine treatment. Foaming of the solvent is undesired as it reduces the capacity of the system and can result in carryover of the solvent into the product gas stream.

Preferably an adsorbent is chosen which has a preferential adsorption strength such that organic sulfur compounds like mercaptans are most strongly adsorbed, followed by heavier hydrocarbons, generally in the direction of decreasing molecular weight (thus, hexane is preferably adsorbed over pentane, which is preferably adsorbed over butane).

Any known adsorbent effective to selectively adsorb organic sulfur compounds can be used, such as adsorbents based on silica gel, silica aluminate, activated carbons, molecular sieves such as a zeolite, or a combination thereof. In a preferred embodiment, the adsorbent comprises at least one of a silica gel, a zeolite and a silica aluminate. The adsorbent used in the process of this invention may be employed in any useful physical form. This includes fine powders, shaped particles such as fluidizable microspheres, pellets, honeycombs, or in composites supported on substrates.

The adsorbent can be of any suitable arrangement including fixed bed, slurry bed, moving bed, or ebullating bed. It is preferred that the adsorbent material be arranged as a fixed bed. Typically, particle size of the adsorbent is in the range of from 2.5 mm to 5.0 mm.

Useful molecular sieve adsorbents include zeolite molecular sieves, EXS sieves, activated clays and the like. Examples of molecular sieves include the aluminophosphates and silicoaluminophosphates described in US 4,440,871, US 4,310,440 and US 4,567,027. Examples of zeolites include chabazite, also referred to as Zeolite D, clinoptilolite, erionite, faujasite, also referred to as Zeolite X, and Zeolite Y, ferrierite, mordenite, Zeolite A and Zeolite P. Other zeolites that may be suitable are those having a high silica content, i.e., those having silica to alumina ratios greater than 10 and typically greater than 100. One such high silica zeolite is silicalite, which includes both the silicapolymorph described in US 4,061,724 and the F-silicalite disclosed in US 4,073,865.

EXS molecular sieves are distinguished from other molecular sieves by possessing octahedrally coordinated active sites in the crystalline structure. Examples of EXS molecular sieves include ETS-4 (US 4,938,939), ETS-10 (US 4,853,202) and ETAS-10 (US 5,244,650), all of which are titanium silicates or titanium aluminum silicates.

It is particularly useful to employ one or more silica gel adsorbents. An example of such an adsorbent useful in the process of the invention is Sorbead®, e.g., Sorbead® R, Sorbead® H, and Sorbead® WS, or combinations thereof, available from BASF SE.

In a preferred embodiment, the process envisages providing a plurality of adsorbers, the adsorber(s) being operable in (α) adsorption mode wherein the adsorber is configured to receive said fluid stream comprising sulfur compounds including organic sulfur compounds to produce an organic sulfur compounds-depleted fluid stream; or (β) regeneration mode wherein the adsorber is configured to receive a purge gas to be passed through the spent adsorbent to obtain a regenerated adsorbent and an organic sulfur compounds-containing purge gas. Here, the fluid stream is passed through at least one of the adsorbers; and the adsorbent in one or more of the other adsorbers is being regenerated. Accordingly, while one adsorber is involved in the adsorption process, two adsorbers are being regenerated by a step of heating followed by a cooling step.

Specifically, it is preferred that the adsorption and regenerating steps, i.e., steps b) and c), are carried out as a thermal swing adsorption process. Thermal swing adsorption processes are generally known in the art for various types of adsorptive separations. Generally, thermal swing processes utilize the process steps of adsorption at a low temperature, regeneration at an elevated temperature with a hot purge gas, and a subsequent cooling down to the adsorption temperature. One process generally exemplary of thermal swing processes is described in US 4,484,933.

Accordingly, the temperatures employed during a thermal swing adsorption process play an important role, in particular for regeneration purposes. In a thermal swing process, the regeneration temperature must be higher than the adsorption temperature in order to effect the desorption of organic sulfur compounds. During the adsorption step b), which utilizes an adsorbent effective to selectively adsorb organic sulfur compounds from a fluid stream comprising sulfur compounds, like a raw natural gas feed stream, the temperature is preferably maintained at less than 65 °C, and more preferably from about 15 °C to about 50 °C. In the regeneration step c), the organic sulfur compounds and co-adsorbed compounds adsorbed by the adsorbent in the first step are released from the adsorbent, thus regenerating the adsorbent, at temperatures preferably from about 140 °C to about 300 °C.

The nature of the purge gas used in the regeneration step c) is not critical to this invention. It is, however preferred that the purge gas is a gas stream intrinsic to the process or a downstream process. For instance, the purge gas is part of a waste stream from a downstream process or the untreated fluid stream comprising sulfur compounds. It is particularly useful to employ a purge gas comprising an untreated fluid stream for regeneration of the adsorbent. Alternatively, the purge gas source can be from outside the processes of the present invention.

Typically, the purge gas is heated and the heated purge gas stream is circulated through the adsorbent to desorb the adsorbed components. Regeneration can be carried out in a direction co-current or counter-current to that of the adsorption step.

The pressures used during the adsorption and regeneration steps are generally elevated at typically 50 to 85 bar absolute. Typically, organic sulfur compounds adsorption is carried out at pressures close to that of the feed stream, i.e. the fluid stream comprising sulfur compounds, and the regeneration steps may be conducted at about the adsorption pressure or at a reduced pressure. When a portion of an adsorption effluent stream is used as a purge gas, it is preferred in one aspect of the invention that the regeneration be conducted at about the adsorption pressure, especially when part of the organic sulfur compounds-containing purge gas is reintroduced into the untreated fluid stream comprising sulfur compounds, for example. However, it is important to note that although the pressure reduction may assist in the regeneration of the adsorbent, the regeneration is primarily conducted thermally.

In one embodiment, the process comprises providing three or more adsorbers. Conveniently, the adsorbers are essentially identical, each containing the same adsorbent. At any given time, one of these adsorbers is involved in the adsorption of organic sulfur compounds from the fluid stream comprising sulfur compounds. Of the other two adsorbers, one is undergoing the regeneration process, employing a heated purge gas stream to release previously adsorbed organic sulfur compounds and co-adsorbed compounds from the adsorbent, as previously described, and the other is being cooled, typically employing a cool temperature gas stream to cool the column after the regeneration process. In one embodiment, a part of the untreated fluid stream comprising sulfur compounds is used to cool the adsorbent column after thermal regeneration. The effluent stream from this cooling process can then be heated with an external heating source, e.g., a fired heater to 140 to 300 °C, and redirected though another adsorbent column, thereby causing the adsorbent therein to release adsorbed organic sulfur compounds and co-adsorbed compounds to obtain an organic sulfur compounds-containing purge gas, thus, regenerating the adsorbent column for further adsorption cycles.

Accordingly, the adsorption step, desorption, and cooling steps of the thermal swing adsorption process operate as multiple timed cycles of adsorption and desorption. The cycle times used in the adsorption step, desorption, and cooling steps of the process are not critical to the process except that longer times may require larger amounts of adsorbent. Typical cycle times range from 30 minutes to 4 hours.

The organic sulfur compounds-containing purge gas obtained in regeneration step c) is treated to dispose of the organic sulfur compounds. The organic sulfur compounds are turned in a stabilized form so that they can be physically transported out of the gas processing facility. In step d) of the process of the invention, the organic sulfur compounds-containing purge gas is processed to obtain a stabilized liquid containing organic sulfur compounds and a first offgas.

In a preferred embodiment, the stabilized liquid comprises most of the organic sulfur compounds contained in the purge gas. For example, the stabilized liquid preferably comprises most of the mercaptans contained in the purge gas, and the first offgas preferably comprises most of the more volatile components comprised in the purge gas, such as carbon dioxide and hydrogen sulfide.

In a preferred embodiment, the stabilized liquid comprises at least 95 wt.-%, preferably at least 98 wt.-% and more preferably at least 99 wt.-%, for example at least 99.5 wt.-% of the organic sulfur compounds contained in the purge gas, based on the total amount of organic sulfur compounds comprised in the purge gas. In an especially preferred embodiment, the stabilized liquid comprises at least 95 wt.-%, preferably at least 98 wt.-% and more preferably at least 99 wt.-%, for example at least 99.5 wt.-% of the mercaptans contained in the purge gas, based on the total amount of mercaptans comprised in the purge gas.

In another preferred embodiment, the first offgas comprises at least 95 wt.-%, preferably at least 98 wt.-% and more preferably at least 99 wt.-%, for example at least 99.5 wt.-% of the carbon dioxide and hydrogen sulfide comprised in the purge gas, based on the total amount of carbon dioxide and hydrogen sulfide comprised in the purge gas.

In a preferred embodiment, step d) comprises
d-1) partially condensing the organic sulfur compounds-containing purge gas to obtain a condensate and a gas stream containing non-condensed compounds; and
d-2) distilling the condensate to obtain the stabilized liquid containing organic sulfur compounds and the first offgas.

Preferably, the gas stream containing the non-condensed compounds, as obtained in step d-1), is essentially free of organic sulfur compounds, such as mercaptans. In a preferred embodiment, the condensate comprises at least 95 wt.-%, preferably at least 98 wt.-% and more preferably at least 99 wt.-%, for example at least 99.5 wt.-% of the organic sulfur compounds contained in the purge gas, based on the total amount of organic sulfur compounds comprised in the purge gas. In an especially preferred embodiment, the condensate comprises at least 95 wt.-%, preferably at least 98 wt.-% and more preferably at least 99 wt.-%, for example at least 99.5 wt.-% of the mercaptans contained in the purge gas, based on the total amount of mercaptans comprised in the purge gas.

Typically, partial condensation involves cooling of the organic sulfur compounds-containing purge gas to a temperature of 5 °C to 30 °C.

In a typical embodiment, the organic sulfur compounds-containing purge gas is sent to a chiller, optionally after being compressed in a compressor, and then directed to a gas/liquid separator to separate a condensate and a gas stream containing non-condensed compounds. The non-condensed compounds are the most volatile compounds contained in the organic sulfur compounds-containing purge gas, such as N₂, methane and ethane. In a preferred embodiment, the gas stream containing the non-condensed compounds is recycled to step b) ("closed loop process"). In another embodiment the gas stream containing the non-condensable compounds is removed from the process ("open loop process"). The suitable pressure of the gas stream depends on its further fate.

The condensate that now contains the organic sulfur compounds removed from the fluid stream is then passed to a stabilizer such as a distillation column. The stabilized liquid from the stabilizer can be sent to a truck for disposal. The first offgas from the stabilizer may be sent to the second absorber for treatment with a second substream of regenerated absorbent liquid.

The process of the invention involves treatment of the organic sulfur compounds-depleted fluid stream obtained in step b) with an absorbent liquid, preferably a chemical absorbent. The process involves a two-step regeneration of the acid gas-laden absorbent liquid by a decompression step and a regeneration step.

In step e) of the process of the invention, the organic sulfur compounds-depleted fluid stream obtained in step b) is treated in a first absorber with a first substream of a regenerated absorbent liquid to obtain a deacidified organic sulfur compounds-depleted fluid stream and a first acid gas-laden absorbent liquid.

The deacidified organic sulfur compounds-depleted fluid stream constitutes the product stream of the process, e.g., the natural gas product stream.

The absorbent liquid is suitable for removal of acid gases, for example CO₂, H₂S, SO₃, SO₂, CS₂, COS and HCN. The absorbent liquids utilized may be either chemical absorbent liquids or physical absorbent liquids. Chemical absorbent liquids are generally preferred. In one embodiment, an H₂S-selective absorbent liquid is used.

Useful physical absorbent liquids include alcohols, such as methanol; sulfones, such as sulfolane; morpholine derivatives, such as N-formylmorpholine (NFM) and N-acetylmorpholine (NAM); N-alkyl pyrrolidone derivatives, such as N-methyl-2-pyrrolidone (NMP), and polyethylene glycol (PEG) ethers, such as polyethylene glycol dialkyl ethers, like polyethylene dimethyl ethers.

Chemical absorbent liquids used are typically solutions, especially aqueous solutions, of at least one amine. In general, the total concentration of amines in the absorbent liquid is 10% to 60% by weight, preferably 20% to 50% by weight, more preferably 30% to 50% by weight, based on the total weight of the amines in the absorbent liquid. The aqueous amine solution may comprise non-aqueous organic solvents. Examples of such non-aqueous solvents are sulfones such as sulfolane, alcohols such as methanol, lactams such as N-methyl-2-pyrrolidone, glycols and polyalkylene glycols. Preferably, the non-aqueous solvent is selected from sulfones. A preferred non-aqueous solvent is sulfolane.

H₂S-selective absorbent liquids often rely on sterically hindered secondary amines, such as 2-(2-tert-butylaminoethoxy)ethanol (TBAEE), and tertiary amines, such as methyldiethanolamine (MDEA). Tertiary amines and sterically hindered amines exhibit kinetic selectivity for H₂S over CO₂. These amines do not react directly with CO₂; instead, CO₂ is reacted in a slow reaction with the amine and with water to give ionic products. In contrast, H₂S reacts immediately in aqueous amine solutions.

In one embodiment, the absorbent liquid comprises a tertiary amine and/or a severely sterically hindered primary amine and/or a severely sterically hindered secondary amine. Severe steric hindrance is understood to mean a tertiary carbon atom directly adjacent to a primary or secondary nitrogen atom.

The suitable tertiary amines especially include:
1. Tertiary alkanolamines such as
   bis(2-hydroxyethyl)methylamine (methyldiethanolamine, MDEA), tris(2-hydroxyethyl)amine (triethanolamine, TEA), tributanolamine, 2-diethylaminoethanol (diethylethanolamine, DEEA), 2-dimethylaminoethanol (dimethylethanolamine, DMEA), 3-dimethylamino-1-propanol (N,N-dimethylpropanolamine), 3-diethylamino-1-propanol, 2-diisopropylaminoethanol (DIEA), N,N-bis(2-hydroxypropyl)methylamine (methyldiisopropanolamine, MDIPA);
2. Tertiary amino ethers such as
   3-methoxypropyldimethylamine;
3. Tertiary polyamines, for example bis-tertiary diamines such as
   N,N,N',N'-tetramethylethylenediamine, N,N-diethyl-N',N'-dimethylethylenediamine, N,N,N',N'-tetraethylethylenediamine, N,N,N',N'-tetramethyl-1,3-propanediamine (TMPDA), N,N,N',N'-tetraethyl-1,3-propanediamine (TEPDA), N,N,N',N'-tetramethyl-1,6-hexanediamine, N,N-dimethyl-N',N'-diethylethylenediamine (DMDEEDA), 1-dimethylamino-2-dimethylaminoethoxyethane (bis[2-(dimethylamino)ethyl] ether), 1,4-diazabicyclo[2.2.2]octane (TEDA), tetramethyl-1,6-hexanediamine;
   and mixtures thereof.

Tertiary alkanolamines, i.e., amines having at least one hydroxyalkyl group bonded to the nitrogen atom, are generally preferred. Particular preference is given to methyldiethanolamine (MDEA).

The suitable highly sterically hindered amines (i.e., amines having a tertiary carbon atom directly adjacent to a primary or secondary nitrogen atom) especially include:
1. Severely sterically hindered secondary alkanolamines such as
   2-(2-tert-butylaminoethoxy)ethanol (TBAEE), 2-(2-tert-butylamino)propoxyethanol, 2-(2-tert-amylaminoethoxy)ethanol, 2-(2-(1-methyl-1-ethylpropylamino)ethoxy)ethanol, 2-(tert-butylamino)ethanol, 2-tert-butylamino-1-propanol, 3-tert-butylamino-1-propanol, 3-tert-butylamino-1-butanol, and 3-aza-2,2-dimethylhexane-1,6-diol, 2-N-methylaminopropan-1-ol, 2-N-methylamino-2-methylpropan-1-ol;
2. Severely sterically hindered primary alkanolamines such as
   2-amino-2-methylpropanol (2-AMP); 2-amino-2-ethylpropanol; and 2-amino-2-propylpropanol;
3. Severely sterically hindered amino ethers such as
   1,2-bis(tert-butylaminoethoxy)ethane, bis(tert-butylaminoethyl) ether;
   and mixtures thereof.

Generally, H₂S-selective absorbent liquids do not comprise any sterically unhindered primary amine or sterically unhindered secondary amine. A sterically unhindered primary amine is understood to mean compounds having primary amino groups to which only hydrogen atoms or primary or secondary carbon atoms are bonded. A sterically unhindered secondary amine is understood to mean compounds having secondary amino groups to which only hydrogen atoms or primary carbon atoms are bonded. Sterically unhindered primary amines or sterically unhindered secondary amines act as strong activators of CO₂ absorption. Their presence in the absorbent liquid can result in loss of the H₂S selectivity of the absorbent liquid.

Examples of such activators comprise 5-, 6- or 7-membered saturated heterocycles having at least one NH group in the ring, which may comprise one or two further heteroatoms selected from nitrogen and oxygen in the ring, for example piperazine.

In one embodiment, step e) of the process of the invention comprises treating the organic sulfur compounds-depleted fluid stream to selectively remove hydrogen sulfide over carbon dioxide. In this case, it is preferred that the absorbent liquid does not comprise any sterically unhindered primary amine or sterically unhindered secondary amine.

In another embodiment, step e) of the process of the invention comprises treating the organic sulfur compounds-depleted fluid stream to non-selectively remove acid gases. In this case, it is preferred that the absorbent liquid comprises at least one activator selected from a sterically unhindered primary amine and/or a sterically unhindered secondary amine, as described above.

The absorber used is a scrubbing apparatus used in customary gas scrubbing processes. Suitable scrubbing apparatuses are, for example, random packings, columns having structured packings and having trays, membrane contactors, radial flow scrubbers, jet scrubbers, Venturi scrubbers and rotary spray scrubbers, preferably columns having structured packings, having random packings and having trays, more preferably columns having trays and having random packings. The fluid stream is preferably treated with the absorbent liquid in a column in countercurrent. The fluid is generally fed into the lower region and the absorbent liquid into the upper region of the column. Installed in tray columns are sieve trays, bubble-cap trays or valve trays, over which the liquid flows. Columns having random packings can be filled with different shaped bodies. Heat and mass transfer are improved by the increase in the surface area caused by the shaped bodies, which are usually about 25 to 80 mm in size. Known examples are the Raschig ring (a hollow cylinder), Pall ring, Hiflow ring, Intalox saddle and the like. The random packings can be introduced into the column in an ordered manner, or else randomly (as a bed). Possible materials include glass, ceramic, metal and plastics. Structured packings are a further development of ordered random packings. They have a regular structure. As a result, it is possible in the case of packings to reduce pressure drops in the gas flow. There are various designs of structured packings, for example woven packings or sheet metal packings. Materials used may be metal, plastic, glass and ceramic.

The organic sulfur compounds-depleted fluid stream is preferably treated in the first absorber at a pressure of 10 to 150 bar absolute, more preferably 30 to 120 bar absolute, usually 50 to 90 bar absolute.

The temperature of the absorbent liquid in the absorption step is generally about 10 to 100 °C, and when a column is used is, for example, 10 to 70 °C at the top of the column and 50 to 100 °C at the bottom of the column.

The preferred amine-based absorbent liquids of the present invention are typically aqueous solutions, and in this case, the deacidified organic sulfur compounds-depleted fluid stream (product stream) is saturated with water. Therefore, dehydration of this product stream so as to yield a dry product stream may be necessary. This requires a dehydration process downstream from the amine treatment. In general, this dehydration step can be carried out with any known method for dehydration of a gas stream. In a preferred embodiment, the water can be adsorbed with an adsorbent selective for water. In one embodiment, the adsorbent utilized for the dehydration of the product stream is the same as the one used for the removal or organic sulfur compounds from the feed stream, i.e., the fluid stream comprising sulfur compounds. In an especially preferred embodiment, the product stream can be dehydrated in the same adsorption unit as is utilized for the adsorption step b). Thus, a useful and efficient integrated process is provided.

In step f) of the process of the invention, the first acid gas-laden absorbent liquid is decompressed to obtain a second offgas and a partially regenerated absorbent liquid. Specifically, acid gas-laden absorbent liquid is decompressed from a higher pressure, as exists in the first absorber, to a lower pressure of, e.g., 2 to 20 bar absolute, for example 2 to 10 bar absolute, which pressure is at least 2 bar below the pressure at which the organic sulfur compounds-depleted fluid stream is treated in the first absorber. Under these conditions, significant portions of the lower alkanes present in the first acid gas-laden absorbent liquid, such as methane and ethane, are released as gas and can be drawn off. The decompression can be accomplished in a decompression vessel, for example, by means of a throttle valve and/or a decompression turbine.

Preferably, the pressure in the decompression vessel is higher than the pressure at which the second absorber is operated, for example 0.1 to 0.5 bar higher. In this way, no compressor is required if the second offgas is at least partially guided into the second absorber.

The decompression vessel can be used in the form of a horizontal or upright vessel. Internals used may be liquid intake systems suitable for the decompression process. Examples of these include flash box, flashing feed gallery (in the case of upright vessels) or Schoepentoeter intake systems. To improve the separation of gas and liquid in the vessel, it is possible to use additional internals such as random packings, structured packings, knits or perforated sheets.

At least part of the first offgas and/or at least part of the second offgas is treated in a second absorber with a second substream of regenerated absorbent liquid in step g) to obtain a deacidified third offgas, i.e. a deacidified organic sulfur compounds-depleted offgas, and a second acid gas-laden absorbent liquid.

In a preferred embodiment, at least part of the first offgas and at least part of the second offgas is treated in a second absorber in step g) with a second substream of regenerated absorbent liquid liquid to obtain a deacidified third offgas and a second acid gas-laden absorbent liquid.

In an especially preferred embodiment, the first offgas and the second offgas are treated in a second absorber in step g) with a second substream of regenerated absorbent liquid liquid to obtain a deacidified third offgas and a second acid gas-laden absorbent liquid.

By treating at least part of the first offgas and/or at least part of the second offgas with regenerated absorbent liquid in a second absorber, a higher degree of removal of acid gases from the gas streams is possible. This allows for a higher degree of deacidification of the offgas streams of the process. The thus obtained deacidified third offgas can be guided out of the process and be fed, for example, to an offgas aftertreatment such as a combustion.

While the acid gas removal in the first absorber is effected at high pressure, the acid gas enrichment in the second absorber takes place at a lower pressure. Preferably, the second absorber is operated at a pressure of 1 to 4 bar absolute.

The second absorber employed is a scrubbing apparatus used in standard gas scrubbing processes having the preferences mentioned with regard to the first absorber in terms of the embodiments thereof. The second absorber typically has a smaller design than the first absorber.

The second acid gas-laden absorbent liquid is fed to decompression step f) and/or regeneration step h). The second acid gas-laden absorbent liquid is generally not fully laden and can therefore still absorb acid gases such as CO₂ and/or H₂S. Hence, the and second acid gas-laden absorbent liquid may also be fed into absorption step e) to utilize the residual capacity.

The partially regenerated absorbent liquid is regenerated in a desorption column in step h) to obtain an organic sulfur compounds-depleted acid offgas and a regenerated absorbent liquid. The organic sulfur compounds-depleted acid offgas comprises H₂S, CO₂ and any further acidic gas constituents released from the partly regenerated absorbent liquid. In general, the regeneration comprises at least one of the measures of heating, decompressing and stripping with an inert fluid.

The regenerated absorbent liquid is fed to first absorption step e) and second absorption step g).

The regeneration step preferably comprises heating partially regenerated absorbent liquid. The regeneration column has a heater at the bottom, for example a boiler, natural circulation evaporator, forced circulation evaporator or forced circulation flash evaporator. The absorbed acid gases are stripped out by means of the steam obtained by heating the solution. Rather than steam, it is also possible to use an inert fluid such as nitrogen. The regeneration column may be a column having random packings, having structured packings or having trays. At the top, the regeneration column has an outlet for the acid gases released. Entrained absorption medium vapors are condensed in a condenser and recirculated to the column.

The absolute pressure in the desorption column is normally 0.1 to 3.5 bar, preferably 1.0 to 2.5 bar. The temperature is normally of 50°C to 170°C, preferably 70°C to 140°C, more preferred 110°C to 135°C. The regeneration temperature depends on the regeneration pressure.

The partially regenerated absorbent liquid is preferably regenerated to a hydrogen sulfide loading corresponding to an equilibrium loading for an acid gas content of preferably less than 90%, more preferably less than 50%, of the acid gas content of the treated fluid stream comprising sulfur compounds. "Equilibrium loading" is understood to mean the acid gas content in the absorbent liquid which, under the pressure and temperature conditions at the top of the absorber, is in equilibrium with the specified content of acid gas in the treated gas stream that leaves the absorber.

Preferably, the cumulated CO₂ and H₂S loading of the regenerated absorbent liquid is less than 0.10 mol/mol, especially less than 0.05 mol/mol. The loading is expressed as the molar amount of CO₂ + H₂S dissolved in the absorbent liquid divided by the molar amount of the components of the absorbent liquid which react with CO₂ and H₂S (for example amine components).

The organic sulfur compounds-depleted acid offgas obtained in the desorption column in step h) may be fed to a sulfur recovery unit. Sulfur Recovery Units (SRU) convert unwanted hydrogen sulfide (H₂S) and sulfur dioxide (SO₂) to the desired element, sulfur. This is done most often using the Claus process, but also using liquid-redox and biological processes. SRUs are essential parts of natural gas plants, refineries and smelters, where large amounts of H₂S are produced.

Organic sulfur compounds may impair the sulfur recovery process. The process of the invention provides an acid-enriched fluid stream from which organic sulfur compounds, such as mercaptans, have been substantially removed. The process is thus especially favorable in processes wherein fluid streams are obtained which are to be treated in a downstream sulfur recovery process.

As described above, it is possible to achieve high selectivity for the removal of hydrogen sulfide over carbon dioxide, for example by choosing and using a selective absorbent liquid. However, this selectivity is insufficient when an unfavourable ratio of hydrogen sulfide to carbon dioxide in the feed gas leads to an acid gas having such a low content of sulfur components that the acid gas can no longer be processed in a downstream sulfur recovery unit.

In order to process such a "diluted" acid gas in a downstream sulfur recovery unit, such as a biotechnological hydrogen sulfide conversion process or liquid-redox sulfur removal and conversion process, additional measures are therefore necessary. In general, the sulfur components are concentrated by once again removing the sulfur components present in the acid gas of low concentration with an absorption solution by means of a further absorption column. In this case, a higher concentration of sulfur components in the acid gas of the further absorption stage is achieved because of the already better ratios of hydrogen sulfide with respect to carbon dioxide in the acid gas from the prior absorption stages. Units for increasing the concentration of sulfur components are referred to as acid gas enrichment units.

In one embodiment, the organic sulfur compounds-depleted acid offgas is fed to biotechnological hydrogen sulfide conversion process. Such a process (e.g., Thiopaq®) removes and converts hydrogen sulfide from gas streams. The process operates under near-ambient conditions using microorganisms as catalysts. When gas streams are treated, the gas is scrubbed with an aqueous sodium bicarbonate solution, which is regenerated in a bioreactor and recycled to the scrubber. In the regeneration process, elemental sulfur is obtained. As organic sulfur compounds are not converted into elemental sulfur by the bacteria, they can contaminate the obtained elemental sulfur, thus resulting in odor issues.

The principles of a liquid-redox sulfur removal and conversion process (e.g., Lo-Cat®) are similar, but differ in that hydrogen sulfide, absorbed in an alkaline solution, reacts with a metal complex, forming elemental sulfur. The metal complex is reoxidised by air sparging and can be recycled to the hydrogen sulfide scrubber in the alkaline solution. As organic sulfur compounds are only partially converted into elemental sulfur, similar odor issues can arise as in the biotechnological regeneration system.

In one embodiment, the organic sulfur compounds-depleted acid offgas is fed to a Claus unit. In the Claus unit, the hydrogen sulfide present in the gas stream, with supply of air, can be converted to elemental sulfur and permanently removed from the environment. A portion of the hydrogen sulfide is combusted with air in the Claus oven to give sulfur dioxide. A further portion of the hydrogen sulfide reacts with the SO₂ under comproportionation to give elemental sulfur. The rest of the hydrogen sulfide is reacted catalytically with the remaining SO₂ at relatively low temperature to give further elemental sulfur. Still present in the Claus tail gas beyond the last catalytic stage in addition to N₂, steam and CO₂ are traces of sulfur compounds such as SO₂, COS, CS₂ and H₂S, which have to be removed in order to minimize odor nuisance and damage to the environment. By means of a downstream hydrogenation unit, the sulfur present in the Claus tail gas or the oxygen-containing sulfur compounds and/or the carbon disulfide can be hydrogenated to hydrogen sulfide. A hydrogenated Claus tail gas is obtained.

The hydrogenated Claus tail gas preferably has an H₂S content in the range from 0.5% to 5% by volume, more preferably 0.8% to 4.8% by volume. Higher H₂S contents of the hydrogenated Claus tail gas result in an economically disadvantageous higher circulation rate of the absorbent liquid. The hydrogenated Claus tail gas is suitably cooled. This is typically accomplished using a cooler or condenser. Typically, the hydrogenated Claus tail gas is subjected to a water quench. This cools it down to about 30 to 60°C. The cooling of the process gas in the water quench is generally effected by means of circulation water in a closed cooling circuit. The excess water obtained is discharged from the cooling circuit via a level regulation system.

The invention is illustrated in detail by the appended drawings and the examples which follow. Plant components not required for understanding, such as pumps, are not shown in the figures for the sake of clarity.

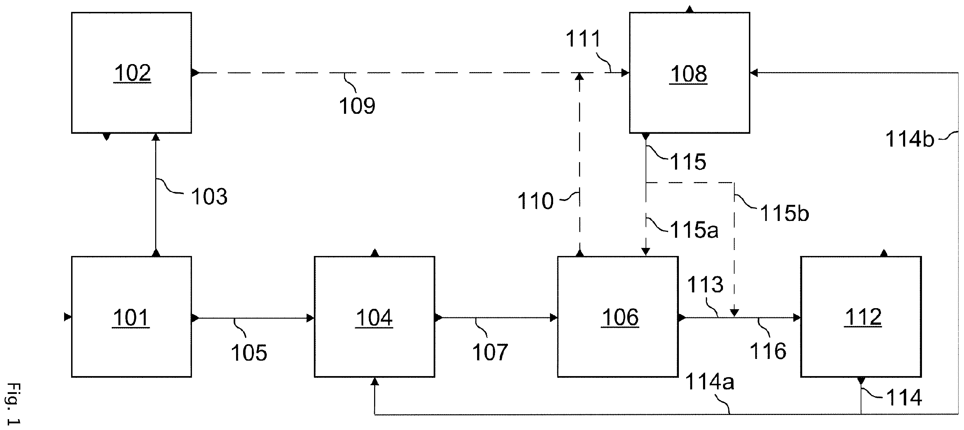

Fig. 1 is a schematic diagram of a plant of the invention suitable for performing the process of the invention.

According to Fig. 1, a fluid stream comprising sulfur compounds is guided into an adsorption unit (101) via a fluid inlet and passed through the adsorption unit (101), which comprises a plurality of adsorbers containing an adsorbent effective to selectively adsorb organic sulfur compounds. An organic sulfur compounds-depleted fluid stream and a spent adsorbent are obtained.

The adsorption unit (101) is designed to allow switching between passing the fluid stream comprising sulfur compounds to each of the adsorbers and independently allow feeding a purge gas to each of the adsorbers.

The spent adsorbent is regenerated by passing the purge gas through the spent adsorbent via the same fluid inlet as for the fluid stream comprising sulfur compounds, or via a separate fluid inlet (not depicted in Fig. 1), to obtain a regenerated adsorbent and an organic sulfur compounds-containing purge gas.

The organic sulfur compounds-containing purge gas is passed out of the adsorption unit (101) via a gas outlet, guided through a gas line (103) and fed into a processing unit (102) via a gas inlet. In processing unit (102), the organic sulfur compounds-containing purge gas is processed to obtain a stabilized liquid containing organic sulfur compounds and a first offgas. The stabilized liquid containing organic sulfur compounds is passed out of the process via a liquid outlet. The first offgas is passed out of the processing unit (102) via a gas outlet.

The organic sulfur compounds-depleted fluid is passed out of the adsorption unit (101) through a fluid outlet, guided through a fluid line (105) and fed into a first absorber (104) via a fluid inlet. In the first absorber (104), the organic sulfur compounds-depleted fluid is treated with a first substream of a regenerated absorbent liquid, which is fed to the first absorber (104) via a liquid inlet, to obtain a deacidified organic sulfur compounds-depleted fluid stream and a first acid gas-laden absorbent liquid.

The deacidified organic sulfur compounds-depleted fluid stream can be considered the product stream and is passed out of the first absorber (104) and the process via a fluid outlet.

The first acid gas-laden absorbent liquid is passed out of the first absorber (104) through a liquid outlet, guided through a liquid line (107) and fed into a decompression vessel (106). In the decompression vessel (106), the first acid gas-laden absorbent liquid is decompressed to obtain a second offgas and a partially regenerated absorbent liquid. The second offgas is passed out of the decompression vessel (106) via a gas outlet. The partially regenerated absorbent liquid is passed out of the decompression vessel (106) via a liquid outlet.

At least part of the first offgas and/or at least part of the second offgas are fed into a second absorber (108) via at least one gas inlet. In the second absorber (108), at least part of the first offgas and/or at least part of the second offgas are treated with a second substream of regenerated absorbent liquid, which is fed into the second absorber (108) via a liquid inlet, to obtain a deacidified third offgas, i.e. a deacidified organic sulfur compounds-depleted offgas, and a second acid gas-laden absorbent liquid.

In one embodiment, at least part of the first offgas is treated in the second absorber (108). In this embodiment, the first offgas is guided through a gas line (109) and fed into the second absorber (108) via a gas inlet. In a further embodiment, the first offgas is treated in the second absorber (108).

In another embodiment, at least part of the second offgas is treated in the second absorber (108). In this embodiment, the second offgas is guided through a gas line (110) and fed into the second absorber (108) via a gas inlet. In a further embodiment, the second offgas is treated in the second absorber (108).

In yet another embodiment, at least part of the first offgas and at least part of the second offgas are treated in the second absorber (108). In a further embodiment, the first offgas and the second offgas are treated in the second absorber (108). In one embodiment, the first offgas is guided through a gas line (109) and fed into the second absorber (108) via a gas inlet, and the second offgas is guided through a gas line (110) and fed into the second absorber (108) via a gas inlet. In another embodiment, the gas lines (109) and (110) merge to form a gas line (111). The merged first offgas and second offgas are guided through gas line (111) and fed into the second absorber (108) via a gas inlet.

The deacidified third offgas is passed out of the second absorber (108) via a gas outlet.

The partially regenerated absorbent liquid is guided through liquid lines (113) and (116) and fed into a desorption column (112) via a liquid inlet. In desorption column (112), the partially regenerated absorbent liquid is regenerated to obtain an organic sulfur compounds-depleted acid offgas and a regenerated absorbent liquid. The regenerated absorbent liquid is passed out of desorption column (112) via a fluid outlet. The organic sulfur compounds-depleted acid offgas is passed out of desorption column (112) via a gas outlet.

In a first embodiment, the second acid gas-laden absorbent liquid is passed out of the second absorber (108) via a liquid outlet, guided through a liquid line (115) and a liquid line (115a), and fed into decompression vessel (106) via a liquid inlet. In a second embodiment, the second acid gas-laden absorbent liquid is passed out of the second absorber (108) via a liquid outlet, guided through liquid line (115), a liquid line (115b) and liquid line (116), and fed into desorption column (112). In a third embodiment, the second acid gas-laden absorbent liquid is passed out of the second absorber (108) via a liquid outlet, guided through liquid line (115), a liquid line (115b) and a liquid line (115c), and fed into desorption column (112).

In a fourth embodiment, parts of the second acid gas-laden absorbent liquid are processed as described in any two or all three of the aforementioned three embodiments. For example, in a fifth embodiment, a part of the second acid gas-laden absorbent liquid is passed out of the second absorber (108) via a liquid outlet, guided through a liquid line (115) and a liquid line (115a), and fed into decompression vessel (106) via a liquid inlet, and a part of the second acid gas-laden absorbent liquid is passed out of the second absorber (108) via a liquid outlet, guided through liquid line (115), a liquid line (115b) and liquid line (116), and fed into desorption column (112).

The regenerated absorbent liquid is guided through a liquid line (114). Subsequently a part of the regenerated absorbent liquid is guided through a liquid line (114a) and fed into first absorber (104) via the liquid inlet, and a part of the regenerated absorbent liquid is guided through a liquid line (114b) and fed into second absorber (108) via the liquid inlet.

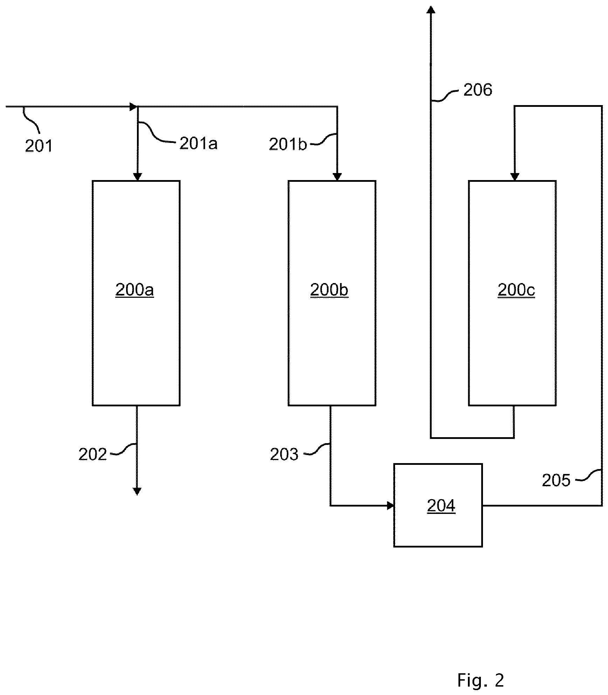

Fig. 2 is a more detailed schematic diagram of an adsorption unit suitable for use in the plant of the invention and in performing the process of the invention.

The adsorption unit according to Fig. 2 is suitable for a thermal swing adsorption process. The adsorption unit comprises three adsorbers (200a), (200b) and (200c), each of which contain an adsorbent effective to selectively adsorb organic sulfur compounds. During a thermal swing adsorption process cycle, each of the adsorbers will alternately rotate through the process steps of (1) an adsorption step for removal of organic sulfur compounds; (2) heat regeneration with a heated stream; and (3) cooling with a low temperature stream.

Thus, at any given time in a continuous purification process one of the adsorbers will be involved in the adsorption process, represented by adsorber (200a), and the remaining two undergoing regeneration and cooling processes, represented by adsorbers (200b) and (200c), respectively. Accordingly, the adsorption unit (101) is designed to allow switching between passing the fluid stream comprising sulfur compounds to each of the adsorbers and independently allow feeding the purge gas to each of the adsorbers.

A fluid stream (201) comprising sulfur compounds, including organic sulfur compounds, is fed into the adsorption unit. A first part of the fluid stream (201), fluid stream (201a), is passed through adsorber (200a) so as to obtain an organic sulfur compounds-depleted fluid stream (202) and a spent adsorbent. The organic sulfur compounds-depleted fluid stream (202) is guided to an adsorber (not shown in Fig. 2), for instance an adsorber (104) as described with regard to Fig. 1. Adsorber (200a) represents an adsorber which in the preceding steps of the process cycle has been heat regenerated and cooled.

A second part of the fluid stream (201), fluid stream (201b), is passed through adsorber (200b). Adsorber (200b) represents an adsorber which in the preceding step of the process cycle has been heat regenerated. By passing fluid stream (201b) through adsorber (200b), the adsorber (200b) is cooled and its regeneration is completed. An effluent stream (203) is obtained. The effluent stream (203) is through a heater (204) to obtain a heated stream (205).

Adsorber (200c) represents an adsorber which in the preceding step of the process cycle has been involved in the adsorption process and thus comprises a spent adsorbent. The heated stream (205), which preferably has a temperature of at least 140 °C, is passed through adsorber (200c) so as to obtain a heated, partially regenerated adsorbent and an organic sulfur compounds-containing purge gas (206). The organic sulfur compounds-containing purge gas (206) is guided to a processing unit (not shown in Fig. 2), for instance a processing unit (102) as described with regard to Fig. 1.

Once each adsorber is heat regenerated and cooled, the adsorber can be recirculated to the starting point of the thermal swing adsorption process cycle, as represented by adsorber (200a), thus allowing for the thermal swing adsorption process to be continuous.

## Claims

1. A process for deacidifying a fluid stream comprising sulfur compounds including organic sulfur compounds, comprising
a) providing at least one adsorber containing an adsorbent effective to selectively adsorb organic sulfur compounds;
b) passing the fluid stream through the adsorber to obtain an organic sulfur compounds-depleted fluid stream and a spent adsorbent;
c) regenerating the spent adsorbent by passing a purge gas through the spent adsorbent to obtain a regenerated adsorbent and an organic sulfur compounds-containing purge gas;
d) processing the organic sulfur compounds-containing purge gas to obtain a stabilized liquid containing organic sulfur compounds and a first offgas;
e) treating the organic sulfur compounds-depleted fluid stream in a first absorber with a first substream of a regenerated absorbent liquid to obtain a deacidified organic sulfur compounds-depleted fluid stream and a first acid gas-laden absorbent liquid;
f) decompressing the first acid gas-laden absorbent liquid to obtain a second offgas and a partially regenerated absorbent liquid;
g) treating at least part of the first offgas and/or at least part of the second offgas in a second absorber with a second substream of regenerated absorbent liquid to obtain a deacidified third offgas and a second acid gas-laden absorbent liquid;
h) regenerating the partially regenerated absorbent liquid in a desorption column to obtain an organic sulfur compounds-depleted acid offgas and a regenerated absorbent liquid;
i) directing the regenerated absorbent liquid to steps e) and g); and
j) directing the second acid gas-laden absorbent liquid to steps f) and/or h).

2. The process according to claim 1, wherein the adsorbent comprises at least one of a silica gel, a zeolite and a silica aluminate.

3. The process according to claim 1 or 2, comprising providing a plurality of adsorbers, the adsorber(s) being operable in (α) adsorption mode wherein the adsorber is configured to receive said fluid stream comprising sulfur compounds including organic sulfur compounds to produce an organic sulfur compounds-depleted fluid stream; or (β) regeneration mode wherein the adsorber is configured to receive a purge gas to be passed through the spent adsorbent to obtain a regenerated adsorbent and an organic sulfur compounds-containing purge gas.

4. The process according to any of the preceding claims, wherein the stabilized liquid comprises the majority of the organic sulfur compounds contained in the purge gas.

5. The process according to any of the preceding claims, wherein step d) comprises
d-1) partially condensing the organic sulfur compounds-containing purge gas to obtain a condensate and a gas stream containing the non-condensed compounds; and
d-2) distilling the condensate to obtain the stabilized liquid containing organic sulfur compounds and the first offgas.

6. The process according to claim 5, wherein the gas stream containing the non-condensed compounds is recycled to step b).

7. The process according to any of the preceding claims, wherein the absorbent liquid comprises an aqueous solution of at least one amine.

8. The process according to any of the preceding claims, wherein the organic sulfur compounds-depleted fluid stream is treated in the first absorber at a pressure of 10 to 150 bar.

9. The process according to any of the preceding claims, wherein the first acid gas-laden absorbent liquid is decompressed to a pressure of 2 to 20 bar, which pressure is at least 2 bar below the pressure at which the organic sulfur compounds-depleted fluid stream is treated in the first absorber.

10. The process according to any of the preceding claims, wherein the organic sulfur compounds-depleted acid offgas is fed to a sulfur recovery unit.

11. The process according to claim 10, wherein the wherein the organic sulfur compounds-depleted acid offgas is subjected to acid gas enrichment before it is fed to the sulfur recovery unit.

12. The process according to any of the preceding claims, wherein the fluid stream is a hydrocarbonaceous fluid stream.

13. The process according to any of the preceding claims, wherein the hydrogen sulfide mass flow in the fluid stream is less than 40 tonnes per day.

14. The process according to claim 13, wherein the fluid stream comprises carbon dioxide and hydrogen sulfide in a molar ratio of more than 5:1.

15. A plant for deacidifying a fluid stream comprising sulfur compounds including organic sulfur compounds, wherein the plant comprises
i) an adsorption unit (101) comprising a plurality of adsorbers, each adsorber containing an adsorbent effective to selectively adsorb organic sulfur compounds; the adsorber(s) being operable in (α) adsorption mode wherein the adsorber is configured to receive said fluid stream comprising sulfur compounds including organic sulfur compounds to produce an organic sulfur compounds-depleted fluid stream; or (β) regeneration mode wherein the adsorber is configured to receive a purge gas to be passed through the spent adsorbent to obtain a regenerated adsorbent and an organic sulfur compounds-containing purge gas;
ii) a first absorber (104) for treating the organic sulfur compounds-depleted fluid stream with a first substream of a regenerated absorbent liquid to obtain a deacidified organic sulfur compounds-depleted fluid stream and a first acid gas-laden absorbent liquid;
iii) a decompression vessel (106) for decompressing the first acid gas-laden absorbent liquid to obtain a second offgas and a partially regenerated absorbent liquid;
iv) a second absorber (108) for treating at least part of the first offgas and/or at least part of the second offgas with a second substream of regenerated absorbent liquid to obtain a deacidified organic sulfur compounds-depleted offgas and a second acid gas-laden absorbent liquid;
v) a desorption column (112) for regenerating the partially regenerated absorbent liquid to obtain an organic sulfur compounds-depleted acid offgas and a regenerated absorbent liquid;
vi) a processing unit (102) for processing the organic sulfur compounds-containing purge gas to obtain a stabilized liquid containing organic sulfur compounds and a first offgas;
vii) means for directing the organic sulfur compounds-depleted fluid stream from the adsorber(s) when in adsorption mode to the first absorber (104); means for directing the first acid gas-laden absorbent liquid from the first absorber (104) to the decompression vessel (106); means for directing the partially regenerated absorbent liquid from the decompression vessel (106) to the desorption column (112); means for directing the second offgas from the decompression vessel (106) to the second absorber (108);
viii) means for directing the organic sulfur compounds-containing purge gas from the adsorber(s) when in regeneration mode to the processing unit (102); and means for directing the first offgas from the processing unit (102) to the second absorber (108).
